# EUROPEAN PATENT APPLICATION

(11) **EP 2 977 407 A1**
(43) Date of publication of application: **27.01.2016**
(21) Application number: 15177451.0
(22) Date of filing: 20.07.2015
(51) Int. Cl.: C08L 63/00

(54) **ORGANIC-INORGANIC HYBRIDS POLYMERIZED IN SITU AT ROOM TEMPERATURE**

(30) Priority: 24.07.2014 IT RM20140418
(71) Applicant: Universita'del Salento, 73100 Lecce (IT)
(72) Inventor: Frigione, Mariaenrica, 73100 LECCE (IT); Lionetto, Francesca, 73100 LECCE (IT)
(74) Representative: Currado, Luisa

(57) **Abstract**

Organic-inorganic hybrids made of an organic phase based on epoxy oligomer and an inorganic phase consisting of silica nanodomains wherein the organic phase based on epoxy oligomer is polymerizable at room temperature and the silica nanodomains are produced *in situ* thanks to a modified sol-gel process carried out in the absence of organic or aqueous solvents and their use as adhesives or matrices for composite materials used in the rehabilitation, repair, consolidation and restoration of infrastructure and cultural heritage as well as in related methods, are disclosed.

## Description

### Field of invention

The present invention refers to the field of organic-inorganic hybrids, and in particular relates to organic-inorganic hybrids constituted by an organic phase based on epoxy oligomers and an inorganic phase consisting of silica nanodomains wherein the organic phase based on epoxy oligomers is able to polymerize at room temperature and the silica nanodomains are produced *in situ* by a modified sol-gel-type process carried out in the absence of organic or aqueous solvents. Additionally, it provides the use of organic-inorganic hybrids as adhesives or as matrices for composite materials that can be used in the rehabilitation, repair, consolidation and restoration of infrastructures and cultural heritage as well as in related methods.

### State of the art

The use of adhesives for structural bonding is a well-established technology in mechanical engineering, and in particular in the aeronautical and automotive industry. In this context, the step of joint bonding by means of adhesives takes place in closed places and under controlled conditions. In the building industry instead, where the outdoor structures are exposed to different conditions of temperature and humidity, adhesives, for example cold-polymerizing, i.e. polymerizing at room temperature, epoxy resins (so-called "cold-cured") are generally used for bonding of non-structural or semi-structural connections, of fiber-reinforced laminates with steel or concrete components.

"Cold-cured" epoxy resins, used as adhesives or as composite matrix in civil engineering applications, harden at room temperature with curing agents, which generally are aliphatic or cycloaliphatic amines (M. Lettieri, F. Lionetto, M . Frigione, L. Price, L. Mascia, Cold-cured epoxy-silica hybrids: Effects of large variation in specimen thickness on the evolution of the Tg and related properties, Polymer Engineering and Science 2010, 51, 358-368). Said curing agents present some drawbacks, for example long times of hardening, required to obtain satisfactory mechanical properties, incomplete polymerization and a glass transition temperature (Tg) of a few degrees (10-20 °C) higher than the common service temperature. Additionally, glass transition temperature (Tg) of polymerized epoxy resins may decrease due to plasticization phenomena, when the resins are exposed to humid environmental conditions, with a consequent reduction of mechanical properties.

These disadvantages make uncertain the durability of the above mentioned adhesives, in particular when used in outdoor applications.

Organic-inorganic hybrid-based on epoxy resins, characterized by having an organic phase and an inorganic phase, interconnected one to each other at nanometer length scale with dimensions between 5 and 50 nanometers, are known (F. Lionetto, L. Mascia, M. Frigione, Evolution of transient states and properties of an epoxy-silica hybrid cured at ambient temperatures, European Polymer Journal, 2013, 49, 1298-1313).

Usually, the organic-inorganic hybrids are produced by sol-gel technology which is based on the hydrolysis and condensation of metal alkoxides in an aqueous solution. By means of this technology the organic phase can be chemically bound with the inorganic phase at a nanometer length scale in mild synthesis conditions, which may be for example the presence of metal-organic precursors, the presence of organic solvents, low reaction temperatures and versatility of processing of the colloidal state (M. Messori, Proceedings of the XXVIII AIM Congress-School on Hybrid and nanostructured materials, applications of hybrid systems by sol-gel, Gargnano (29 April-4 May 2007).

It is known that the sol-gel technology was originally developed to obtain materials consisting of an organic and an inorganic component in order to combine the best qualities of the metal oxides with those of the polymers (GL Wilkes, B. Orler, H. Huang, "Ceramers" Hybrid materials incorporating polymeric/oligomeric species into inorganic glasses utilizing a sol-gel approach, Polymer Preprints 1985, 26, 300-302; H. Schmidt, New type of non-crystalline solids between inorganic and organic materials, Journal of non-crystalline solids 1985, 73, 681-691). The sol-gel technology allows the preparation of inorganic matrices by the initial formation of a colloidal suspension of solid particles in a liquid (sol phase) that, as a result of a process of hydrolysis and condensation, is transformed into a single continuous macromolecule which occupies the entire volume (gel phase). It is also known in the state of the art that the use of the sol-gel technology to produce hybrid systems involves the preparation of alcoholic solutions of metal alkoxides (Si, Ti, Zr, Al, B, etc.) and water, wherein the most used metal alkoxides are siloxanes such as tetraethoxysilane and tetrametoxysilane. The transformation from a sol phase to a gel phase occurs through the reactions of hydrolysis and condensation of the metal alkoxide. In the hydrolysis reaction (1) the metal alkoxide reacts with water resulting in the formation of a hydroxyl group:

M(OR)₄+4H₂O ↔ M(OH)₄+4ROH (1)

Subsequently, by the condensation reaction, the hydroxyl group can react with another hydroxyl group (2a) or with an alkoxy group (2b) with formation of water and alcohol:

=M-OH + HO-M= ↔ ≡M-O-M≡ + H₂O (2a)

=M-OH + RO-M= ↔ ≡M-O-M≡ + ROH (2b)

The formation of a sufficiently high number of M-O-M bonds in certain regions leads to the formation of colloidal particles (sol), whose size, growth and structure depends mainly on the pH of the solution, the temperature and the molar ratio H₂O/alkoxide. By growing, these colloidal particles collide each other until they bind to form a three-dimensional network that occupies the entire volume (gel), whose chemical-physical characteristics strongly depend on the particle size and the degree of crosslinking shortly before gelation (M. Toselli, Proceedings of the XXVIII AIM Congress-School on Hybrid and nanostructured materials, organic-inorganic hybrid materials by sol-gel process, Gargnano (29 April-4 May 2007).

In the epoxy-based organic-inorganic hybrids, obtained by sol-gel reaction between a tetraethoxysilane (TEOS) and a mixture of epoxy resin and hardener, the formation of nanostructured inorganic continuous domains within a network is based on the design of appropriate kinetics for the hydrolysis and condensation reactions of the alkoxide precursor, along with the development of strong interactions with the organic component of the precursor, through the formation of covalent bonds (F. Lionetto, L. Mascia, M. Frigione, Evolution of transient states and properties of an epoxy-silica hybrid cured at ambient temperatures, European Polymer Journal, 2013, 49, 1298-1313). Usually, the formation of the inorganic domains occurs at a faster rate than the cross-linking of the organic component, in particular this occurs in epoxy resins that cure at room temperature (so-called "cold-cured").

Organic-inorganic hybrids with silica produced *in situ* by sol-gel method are known but they polymerize at high temperature and therefore they are not suitable as "cold-cured" adhesives and matrix. (L. Matejka. In Hybrid Nanocomposites for Nanotechncology; Merhari L. Ed., Springer: New York, 2010; F. Piscitelli, M. Lavorgna, G. Buonocore, L. Verdolotti, J. Galy, L. Mascia, Plasticizing and reinforcing features of siloxane domains in amine-cured epoxy/silica hybrids, Macromolecular Materials Engineering, 2013, 298, 896-909; M. Ochi, R. Takahashi, A. Terauchi, Phase structure and mechanical and adhesion properties of epoxy/silica hybrids, Polymer 2001, 42, 5151-5158; M. Ochi, T. Matsumura, Thermomechanical properties and phase structure of epoxy/silica nano-hybrid materials constructed from a linear silicone oligomer, Journal of Polymer Science: Part B: Polymer Physics 2005 43, 1631-1639; M. May, HM Wang, R. Akid, Effects of the Additions of inorganic nanoparticles on the adhesive strength of a hybrid sol-gel epoxy system, International Journal of Adhesion and Adhesives 2010, 30, 505-512; A. Afzal, HM Siddiqi, A comprehensive study of the bicontinuous epoxy-silica hybrid polymers: I. Synthesis, characterization and glass transition, Polymer 2011, 52, 1345-1355).

But are also known organic-inorganic epoxy-silica hybrids which cold cure (M. Lettieri, F. Lionetto, M. Frigione, L. Price, L. Mascia, Cold-cured epoxy-silica hybrids: Effects of large variation in specimen thickness on the evolution of the Tg and related properties, Polymer Engineering and Science 2010, 51, 358-368; F. Lionetto, L. Mascia, M. Frigione, Evolution of transient states and properties of an epoxy-silica hybrid cured at ambient temperatures , European Polymer Journal, 2013, 49, 1298-1313).

Epoxy-silica hybrids obtained with the addition of ionic liquids based on imidazole are also known in the art (RK Donato, L. Matejka, HS Schrekker, J. Pleštil, A. Jigounov, J. Brus, M. Slouf, The multifunctional role of ionic liquids in the formation of epoxy-silica nanocomposites, Journal of Materials Chemistry 2011, 21, 13801-13810; Donato RK, KZ Donato, HS Schrekker, L. Matejka, Tunable reinforcement of epoxy-silica nanocomposites with ionic liquids, Journal of Materials Chemistry 2012, 22, 9939-9948). Ionic liquids are liquids consisting solely of cations and anions, having a melting temperature lower than 100 °C; therefore, even being salts, made of organic cations and anions of different nature, they melt at high temperatures and therefore most of them are in the liquid phase already at room temperature (F. Endres, S. Zein EI Abedin, Air and water stable ionic liquids in physical chemistry Physical Chemistry Chemical Physics in 2006, 8, 2101-2116). One of the first ionic liquid to be synthesized was ethylammonium nitrate (Welton, Room-temperature ionic liquids. Solvents for synthesis and catalysis, Chemical Review 1999, 99, 2071-2083). Ionic liquids have been extensively studied, especially for the development of nuclear warheads batteries and space probes (S. Keskin et al., D. Kayrak-Talay, U. Akman, O. Hortacsu, A review of ionic liquids towards supercritical fluid applications, Journal of Supercritical Fluids 2007, 43, 150-180). Ionic liquids are salts that are able to remain liquid at low temperature for reasons related to the size and symmetry of the ions. In fact, at constant charge, the larger the anion and the cation, the lower the melting temperature. In addition, less symmetric is the structure of the ions less easily these latter are organized in a regular structure in a lattice; consequently, the melting temperature is lower since the lattice energy is low. Ionic liquids exhibit good electrical conductivity, with values ranging from 0.1 mS/cm to 18 mS/cm at room temperature, wide electrochemical window greater than that of water, ability to solvate numerous chemical species, both organic and inorganic, negligible vapor pressure. The negligible vapor pressure makes them non-volatile, in contrast to conventional solvents, which for their broad use and high volatility are considered among the most polluting chemicals. Furthermore, ionic liquids are noncorrosive and not flammable. It is further known in the state of the art that it is possible to modulate the properties of the ionic liquid by synthesizing an appropriate organic cation and using a suitable anion, depending on the specific application for which it is expected to be used (S. Keskin et al., D. Kayrak-Talay, U. Akman, O. Hortacsu, A review of ionic liquids towards supercritical fluid applications, Journal of Supercritical Fluids 2007, 43, 150-180). Ionic liquids which are used as solvents and as electrolytes for electrochemical processes such as electroplating and electropolishing are known in the art (NV Plechkova, KR Seddon, Applications of ionic liquids in the chemical industry, Chemical Society Review 2008, 37, 123-150).The ionic liquid consisting of a mixture of choline chloride and urea is known. Urea is a common fertilizer, as well as a product of the human metabolism; in normal conditions it is presented as a white crystalline solid, with a melting temperature of 133 °C. Choline chloride is classified as an essential nutrient, and is used as an additive in the diet of chickens to accelerate their growth; in normal conditions it is a deliquescent white crystalline solid, with a melting temperature of 302 °C. It is known that mixing these two solids in a molar ratio urea-choline chloride equal to 2:1 and heating to 80 °C, a clear and colorless liquid forms, which solidifies at 12 °C. Ionic liquids such as the eutectic mixture of choline chloride/urea, which have a melting point far away from melting temperatures of the individual constituents, are called Deep Eutectic Solvents (DES) (AP Abbott, G. Capper, DL Davies, RK Rasheed, V. Tambyrajah, Novel solvent properties of choline chloride/urea mixtures, Chemical Communications 2003, 1, 70-71). The eutectic mixture of choline chloride/urea is biodegradable, is easy to prepare and the starting materials are inexpensive and readily available (D. Carriazo, MC Serrano, Gutierrez MC, ML Ferrer, F. del Monte, Deep-eutectic solvents playing multiple roles in the synthesis of polymers and related materials, Chemical Society Review 2012, 41, 4996-5014). It is further known in the state of art the use of imidazolium-based ionic liquids to control the morphology of the silica produced by sol-gel reaction during the cure of epoxy resin (RK Donato, L. Matejka, HS Schrekker, J. Pleštil, A. Jigounov, J. Brus, M. Slouf, The multifunctional role of ionic liquids in the formation of epoxy-silica nanocomposites, Journal of Materials Chemistry 2011, 21, 13801-13810; Donato RK, KZ Donato, HS Schrekker, L Matejka, Tunable reinforcement of epoxy-silica nanocomposites with ionic liquids, the Journal of Materials Chemistry 2012, 22, 9939-9948).

J. Macan, H. Ivankovic, M. Ivankovic, HJ Mencer, Synthesis and Characterization of Organic-Inorganic Hybrids Based on Epoxy Resin and 3-Glycidyloxypropyltrimethoxysilane, Journal of Applied Polymer Science, Vol. 92, 498-505 (2004) discloses organic-inorganic hybrids based on diglycidyl ether of bisphenol A (DGEBA) and 3-glycidyloxypropyltrimethoxysilane (GOTMS). F. Bondioli, ME Darecchio, AS Luyt, M. Messori, Epoxy Resin Modified with Metal Oxides In Situ Generated by Means of Sol-Gel Process, Journal of Applied Polymer Science, Vol. 122, 1792-1799 (2011) discloses organic-inorganic hybrids based on diglycidyl ether of bisphenol A (DGEBA) and tetraethoxysilane (TEOS). Both systems described by Macan et al., 2004 and by Bondioli et al., 2011 are polymerized in two steps with a post-cure step in an oven at high temperatures between 120 and 170 °C and for long times comprised from 4 to 24 hours, and are prepared by means of a method which does not require the use of ionic liquids or deep eutectic solvents.

### Technical problem

The present invention differs from the known prior art because the proposed organic-inorganic hybrids are composed by an organic phase based on epoxy oligomers which harden at room temperature (cold-cured) and by an inorganic phase consisting of silica nanodomains obtainable *in situ,* said phase being covalently bonded one to each other and said hybrids are obtained by a sol-gel method being modified with respect to the methods known in the art.

The proposed modified sol-gel process differs from those known in the state of the art because it is carried out in the absence of organic and/or aqueous solvents while ionic liquids based on phosphorous and or inorganic deep eutectic solvent (DES) are used. Furthermore, the ionic liquids used are made from biodegradable substances, are simple to be prepared and the starting materials are inexpensive and easily available. The ionic liquids used differ from those known in the art and in particular from those described in Donato et al. 2011 and Donato et al. 2012, because these latter are based on imidazole. Donato et al. 2011 and Donato et al. 2012 propose a sol-gel method that differs from the proposed process for the different conditions of hydrolysis and condensation wherein, in particular, polymerization that takes place at high temperatures between 130 and 190 °C and not at room temperature.

Even more in detail, the process of the present invention differs from Macan et al. 2004 because the latter employs for the synthesis of an epoxy-silica hybrid a mixture of epoxy resin of the type diglycidyl ether of bisphenol A (DGEBA) and 3-glycidyloxypropyltrimethoxysilane (GOTMS) but does not use ionic liquids based on phosphorus and inorganic deep eutectic solvents.

Similarly, Bondioli et al. 2011 employs a mixture of epoxy resin of the type diglycidyl ether of bisphenol A (DGEBA) and tetraethoxysilane (TEOS) but does not use ionic liquids based on phosphorus and inorganic deep eutectic solvents.

Additionally, in Macan et al. 2004 and Bondioli et al. 2011, the method of the sol-gel type differs from the proposed for the different conditions of hydrolysis that take place at ambient temperature and for the polymerization that occurs in two steps with a post-cure in oven at high temperatures between 120 and 170 °C and for long times comprised from 4 to 24 hours, and not at room temperature. Furthermore, instead of aliphatic or cycloaliphatic amines, polyetheramines are used for the polymerization, which contain primary amino groups at the end of a polyether chain based on propylene oxide or on ethylene oxide or on a mixture of both. More precisely, polyoxypropylene diamine is used as a curing agent in Macan et al. 2004, and polypropylene glycol-b-polyethylene glycol-b-poly(propylene glycol) bis(2-aminopropyl ether) is used as a curing agent in Bondioli et al. 2011.

The sol-gel process and the polymerization take place together, the organic phase crosslinks at room temperature and, at the same time, the inorganic domains are formed within the polymer network by means of the reactions of hydrolysis and condensation, and the presence of curing agents allows organic and inorganic phases to bind with covalent bonds.

The technical problem that the present invention wishes to solve is to provide adhesives and matrices that can polymerize at room temperature, even rather quickly, which have high homogeneity, and are resistant to environmental and weather changes and stresses so that they can be effectively employed in construction industry and in particular in the rehabilitation, repair, consolidation and restoration of infrastructures and cultural heritage. Not secondarily, they can also be used in bio-building.

The synergistic effect derived from the biphasic nature of the organic and inorganic hybrid amplifies the thermo-mechanical properties and makes it suitable for several applications.

The organic-inorganic hybrids proposed by the present invention, thanks to the components that constitute them and to the particular process for their preparation, present improved thermomechanical characteristics compared to the products known in the art: a high homogeneity, a high glass transition temperature (Tg) of the organic phase, a high capacity of load bearing, high shear strength, high flexural strength and flexural modulus, higher ability to adhere to surfaces of different nature, such as for example concrete, masonry, stone, wood, plastic and metal and reduced plasticization effects due to the water absorbed in the organic network, when exposed to atmospheric agents. Furthermore, they are eco-friendly and eco-sustainable because they have low environmental impact, being non-toxic and not harmful for the users and the environment.

The use of ionic liquids based on phosphorus and inorganic deep eutectic solvents in the process for the preparation of the proposed organic-inorganic hybrids is crucial for the control of the nanometric morphology of the silica nanodomains generated *in situ* by the proposed modified sol-gel process: in fact said control occurs simultaneously with the cross-linking of the organic fraction. The achieving of a co-continuous and nanometric silica fraction is responsible for the improved thermo-mechanical properties of the proposed organic-inorganic hybrid, in fact, in the absence of an optimized morphology of the silica nanodomains any reinforcement of the organic phase could not be obtained, but, on the contrary, the plasticization and a consequent worsening of the thermo-mechanical properties would occur.

Ionic liquids based on phosphorus and inorganic deep eutectic solvents act as multifunctional agents for the synthesis of the proposed organic-inorganic hybrid because they act as catalysts for the formation of silica by sol-gel reaction within the epoxy matrix; as liquid coupling agents to reduce the interfacial tension between the silica reinforcement and the epoxy matrix and as agents of physical cure for contributing to the increase of mechanical properties.

The improvement of the process for the preparation of the proposed organic-inorganic hybrids in the functionalization step makes it possible to improve the compatibility between the two phases and the simultaneous formation of the three-dimensional epoxy network and the nanometric structures.

The increased resistance to environmental agents of the proposed organic-inorganic hybrids makes them particularly suitable for rehabilitation/restoration works outdoor, which are more effective and durable. The shortened time necessary for the polymerization results in reduced application times and therefore in a reduction of intervention costs, such as reduced scaffold time and service interruption due to rehabilitation/ restoration works.

### Object of the invention

The technical problem of the present invention is solved by providing an organic-inorganic hybrid consisting of an organic phase consisting of diglycidyl ether of bisphenol A (DGEBA) of formula (I): 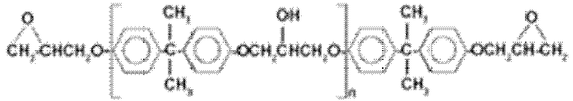 wherein n is greater than 0.1, polymerized at room temperature and an inorganic phase consisting of at least one silica nanodomain obtained *in situ,* wherein said phases are covalently bonded one to each other.

The technical problem of the present invention is further solved by providing a formulation in liquid phase comprising:
diglycidyl ether of bisphenol A (DGEBA) with formula (I) 40-70%
coupling agent 8-15%
siloxane precursor 10-16%
ionic liquid 0,5-10 %
curing agent 10-15%
wherein the percentages (%) are expressed as percentage by weight of the total weight of the formulation
characterized in that:
the coupling agent is at least one amino-silane coupling agent
the siloxane precursor is at least one silicon alkoxide selected from the group comprising silicon alkoxides of formula (II): Si(OR)₄ wherein R is C₁-C₆ linear alkyl
and silicon alkoxides of formula (III): R¹-Si(OR²)₃
wherein R¹ is a C₁-C₆ linear alkyl optionally containing an epoxide ring
and R² is a C₁-C₆ linear alkyl with the proviso that, when R¹ and R² are both C₁-C₆ linear alkyl, they are different from each other, and mixture thereof
the ionic liquid is selected from the group consisting of ionic liquids based on phosphorus, inorganic deep eutectic solvents and mixture thereof
the curing agent is at least one compound of formula (IV): R'(NH)ₓ(NH₂)₂
wherein R' is C₁-C₆ linear or branched alkyl, or cycloalkyl and x is between 0 and 2.

Additionally, the technical problem is solved by an organic-inorganic hybrid consisting of an organic phase consisting of diglycidyl ether of bisphenol A (DGEBA) of formula (I) polymerized at room temperature and an inorganic phase consisting of at least one silica nanodomain, obtained *in situ,* wherein these phases are covalently bonded one to each other, obtainable by the process comprising the steps of:
a) functionalization of diglycidyl ether of bisphenol A (DGEBA) of formula (I) in the presence of a coupling agent;
b) hydrolysis of the siloxane precursor in the presence of ionic liquid;
c) mixing the product of step a) with the product of step b);
d) mixing the product of step c) with a curing agent at room temperature;
e) casting of the product of step d) at room temperature;
f) crosslinking at room temperature of the product of step e) at room temperature;
wherein in step a) the coupling agent is at least one amino-silane coupling agent;
in the step b) the siloxane precursor is
at least one silicon alkoxide selected from the group comprising silicon alkoxides of formula (II): Si(OR)₄ wherein R is C₁-C₆ linear alkyl
and silicon alkoxides of formula (III): R¹-Si(OR²)₃
wherein R¹ is a C₁-C₆ linear alkyl optionally containing an epoxide ring
and R² is a C₁-C₆ linear alkyl with the proviso that when R¹ and R² are both C₁-C₆ linear alkyl, they are different from each other and mixture thereof
and the ionic liquid is selected from the group consisting of ionic liquids based on phosphorus, inorganic deep eutectic solvents and mixture thereof;
in the step d) the curing agent is at least one compound of formula (IV): R'(NH)ₓ(NH₂)₂
wherein R' is C₁-C₆ linear or branched alkyl, or cycloalkyl and x is between 0 and 2.

Object of the present invention is the use of said organic-inorganic hybrid as an adhesive or as a matrix for composite materials.

A further object of the present invention is an adhesive obtained by casting and crosslinking at room temperature of the formulation in the liquid phase comprising, in percentage by weight of the total weight of the formulation:
diglycidyl ether of bisphenol A (DGEBA) with formula (I) 40-70%
coupling agent 8-15%
siloxane precursor 10-16%
ionic liquid 0,5-10 %
curing agent 10-15%
characterized in that:
the coupling agent is at least one amino-silane coupling agent;
the siloxane precursor is at least one silicon alkoxide selected from the group comprising silicon alkoxides of formula (II): Si(OR)₄ wherein R is C₁-C₆ linear alkyl
and silicon alkoxides of formula (III): R¹-Si(OR²)₃
wherein R¹ is a C₁-C₆ linear alkyl optionally containing an epoxide ring
and R² is a C₁-C₆ linear alkyl with the proviso that when R¹ and R² are both C₁-C₆ linear alkyl, they are different from each other and mixture thereof;
the ionic liquid is selected from the group consisting of ionic liquids based on phosphorus, inorganic deep eutectic solvents and mixture thereof;
the curing agent is at least one compound of formula (IV): R'(NH)ₓ(NH₂)₂
wherein R' is C₁-C₆ linear or branched alkyl, or cycloalkyl and x is between 0 and 2.

A further object of the present invention is a matrix for composite materials obtained by casting and crosslinking at room temperature of the formulation in the liquid phase comprising, in percentage by weight to the total weight of the formulation:
diglycidyl ether of bisphenol A (DGEBA) of formula (I) 40-70%
coupling agent 8-15%
siloxane precursor 10-16%
ionic liquid 0,5-10 %
curing agent 10-15%
characterized in that
the coupling agent is at least one amino-silane coupling agent;
the siloxane precursor is
at least one silicon alkoxide selected from the group comprising silicon alkoxides of formula (II): Si(OR)₄ wherein R is C₁-C₆ linear alkyl
and silicon alkoxides of formula (III): R¹-Si(OR²)₃
wherein R¹ is a C₁-C₆ linear alkyl optionally containing an epoxide ring
and R² is a C₁-C₆ linear alkyl with the proviso that, when R¹ and R² are both C₁-C₆ linear alkyl, they are different from each other and mixture thereof;
the ionic liquid is selected from the group consisting of ionic liquids based on phosphorus, inorganic deep eutectic solvents and mixture thereof;
the curing agent is at least one compound of formula (IV): R'(NH)ₓ(NH₂)₂
wherein R' is C₁-C₆ linear or branched alkyl, or cycloalkyl and x is between 0 and 2.

It is an object of the present invention the process for the preparation of the formulation in the liquid phase comprising the following steps:
a) functionalization of diglycidyl ether of bisphenol A (DGEBA) of formula (I) in the presence of a coupling agent;
b) hydrolysis of the siloxane precursor in the presence of ionic liquid;
c) mixing the product of step a) with the product of step b);
d) mixing the product of step c) with a curing agent at room temperature;
e) casting of the product of step d) at room temperature;
wherein in step a) the coupling agent is at least one amino-silane coupling agent;
in step b) the siloxane precursor is at least one silicon alkoxide selected from the group comprising silicon alkoxides of formula (II): Si(OR)₄
wherein R is C₁-C₆ linear alkyl
and silicon alkoxides of formula (III): R¹-Si(OR²)₃
wherein R¹ is a C₁-C₆ linear alkyl optionally containing an epoxide ring
and R² is a C₁-C₆ linear alkyl with the proviso that , when R¹ and R² are both C₁-C₆ linear alkyl, they are different from each other and mixture thereof
and the ionic liquid is selected from the group consisting of ionic liquids based on phosphorus, inorganic deep eutectic solvents and mixture thereof;
in step d) the curing agent is at least one compound of formula (IV): R'(NH)ₓ(NH₂)₂
wherein R' is C₁-C₆ linear or branched alkyl, or cycloalkyl and x is between 0 and 2.

It is an object of the present invention the process for the preparation of the organic-inorganic hybrid comprising the following steps:
a) functionalization of diglycidyl ether of bisphenol A (DGEBA) of formula (I) in the presence of a coupling agent;
b) hydrolysis of the siloxane precursor in the presence of ionic liquid;
c) mixing the product of step a) with the product of step b);
d) mixing the product of step c) with an amine curing agent at room temperature;
e) casting the product of step d) at room temperature;
f) crosslinking at room temperature of product of step e) at room temperature;
wherein in step a) the coupling agent is at least one amino-silane coupling agent;
in step b) the siloxane precursor is at least one silicon alkoxide selected from the group comprising silicon alkoxides of formula (II): Si(OR)₄
wherein R is C₁-C₆ linear alkyl
and silicon alkoxides of formula (III): R¹-Si(OR²)₃
wherein R¹ is a C₁-C₆ linear alkyl optionally containing an epoxide ring
and R² is a C₁-C₆ linear alkyl with the proviso that, when R¹ and R² are both C₁-C₆ linear alkyl, they are different from each other and mixture thereof
and the ionic liquid is selected from the group consisting of ionic liquids based on phosphorus, inorganic deep eutectic solvents and mixture thereof;
in step d) the curing agent is at least one compound of formula (IV): R'(NH)ₓ(NH₂)₂
wherein R' is C₁-C₆ linear or branched alkyl, or cycloalkyl and x is between 0 and 2.

It is an object of the present invention a method for the structural restoration of buildings proving the application , by injection or brushing in the recovery site, of the formulation in the liquid phase comprising, in weight percentage to the total weight of the formulation:
diglycidyl ether of bisphenol A (DGEBA) with formula (I) 40-70%
coupling agent 8-15%
siloxane precursor 10-16%
ionic liquid 0,5-10 %
curing agent 10-15%
characterized in that:
said formulation being obtained by
   a) functionalization of diglycidyl ether of bisphenol A (DGEBA) of formula (I) in the presence of a coupling agent;
   b) hydrolysis of the siloxane precursor in the presence of ionic liquid;
   c) mixing the product of step a) with product of step b);
   d) mixing the product of step c) with a curing agent at room temperature;
   e) casting of product of step d) at room temperature;
wherein the coupling agent is at least one amino-silane coupling agent;
the siloxane precursor is at least one silicon alkoxide selected from the group comprising silicon alkoxides of formula (II): Si(OR)₄
wherein R is C₁-C₆ linear alkyl
and silicon alkoxides of formula (III): R¹-Si(OR²)₃
wherein R¹ is a C₁-C₆ linear alkyl optionally containing an epoxide ring
and R² is a C₁-C₆ linear alkyl with the proviso that, when R¹ and R² are both C₁-C₆ linear alkyl, they are different from each other and mixture thereof
and the ionic liquid is selected from the group consisting of ionic liquids based on phosphorus, inorganic deep eutectic solvents and mixture thereof;
the curing agent is at least one compound of formula (IV): R'(NH)ₓ(NH₂)₂
wherein R' is C₁-C₆ linear or branched alkyl, or cycloalkyl and x is between 0 and 2, and the subsequent crosslinking of the same at room temperature for a time sufficient for the full cure of the same until obtaining a matrix formed by the organic-inorganic hybrid consisting of an organic phase made of diglycidyl ether of bisphenol A (DGEBA) of formula (I) polymerized at room temperature and an inorganic phase consisting of at least one silica nanodomain, obtained *in situ,* wherein said phases are covalently bonded one to each other.

Further features of the invention will be clear from the following detailed description with reference to the attached figures.

### Brief description of the figures

Figure 1 shows in a graph the results of the calorimetric characterization of formulations in the liquid phase expressed as the behavior of the heat flow versus temperature.
Figure 2 shows in a graph the results of the rheological characterization expressed as the viscosity behavior versus the curing time of the formulation in the liquid phase in the early hours of polymerization, compared to the control.
Figure 3 shows in a graph the results of the calorimetric characterization expressed as the trend of the glass transition temperature (Tg) versus the curing time of the solid organic-inorganic hybrid after polymerization, compared to the control.
Figure 4 shows in a graph the results of the thermogravimetric characterization, expressed as the trend of the weight percentage of the solid organic-inorganic hybrid after the polymerization versus the temperature, compared to the control.

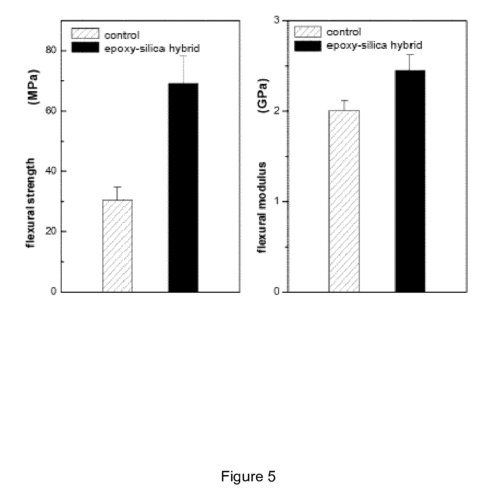

Figure 5 shows in a graph the results of the mechanical characterization expressed as the flexural strength and flexural modulus of the solid organic-inorganic hybrid after polymerization, compared to the control.

### Detailed description of the invention

### Definitions

Within the meaning of the present invention, organic-inorganic hybrid means a material wherein an organic phase and an inorganic phase are mixed at a submicroscopic level, resulting in a homogeneous phase.

Within the meaning of the present invention, diglycidyl ether of bisphenol A (DGEBA) means a thermosetting at room temperature epoxy oligomer belonging to the family of difunctional diglycidyl ether of bisphenol A (DGEBA) of formula (I) 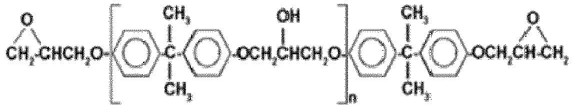 wherein n is greater than 0.1 and the value of n determines the molecular weight.

Within the meaning of the present invention, nanodomain means a material of nanometric dimensions in the order of billionths of a meter, such as for example nanoparticles or nanoclusters of silica.

Within the meaning of the present invention, ionic liquids means chemical compounds consisting of ions and combinations thereof, wherein, unlike salts, are liquid at room temperature even without the presence of a molecular solvent and have melting points lower than the boiling point of water, in particular ionic liquids based on phosphorus, such as for example phosphonium phosphinate ([H₂PO₂]-[PH₄]+), trihexyl-tetradecyl phosphonium trimethylpentyl-phosphinate.

Within the meaning of the present invention, inorganic deep eutectic solvent (DES) means an ionic solvent composed of a mixture that forms a eutectic with a melting temperature far lower than that of each component.

Within the meaning of the present invention, eutectic mixture (or heterogeneous azeotrope) means a mixture of substances whose melting point is lower than that of the single substances contained in it, such as for example an eutectic mixture of choline chloride and urea in a molar ratio 1: 2.

Within the meaning of the present invention, glass transition temperature (Tg) means the value of the temperature at which a polymer undergoes, for cooling, the transformation from a rubbery state to a rigid, because the motions of the side chains are impeded.

Within the meaning of the present invention, homogeneity means a uniform distribution of organic and inorganic nanometric phases into the microstructure of the hybrid organic-inorganic.

Within the meaning of the present invention, load-bearing capacity means the mechanical strength of a material to the forces applied from the outside.

Within the meaning of the present invention, adhesion capacity means the ability of a material to remain bonded to different substrates.

Within the meaning of the present invention, plasticization effects means the reduction of the glass transition temperature caused by the water (in liquid or vapor form) on the cured epoxy resin or on the organic part of the organic-inorganic hybrid.

Within the meaning of the present invention, coupling agent means a molecule having at least two different functional groups by means of which allows the bond between materials which are not similar. In particular, an amino-silane coupling agent, with the amino group -NH₂ and a silane group -SiOH, in which the amino group binds covalently the epoxy network and the epoxy silane group covalently binds the silica nanodomains ensuring the covalent bond between the organic and inorganic phase of the hybrid, for example trimethoxysilyl-propylamine.

Within the meaning of the present invention, siloxane precursors mean chemical compounds based on silicon alkoxides able to produce silica by sol-gel method, in particular those of formula (II): Si(OR)₄
wherein R is C₁-C₆ linear alkyl
and of formula (III): R¹-Si(OR²)₃
wherein R¹ is a C₁-C₆ linear alkyl optionally containing an epoxide ring
and R² is a C₁-C₆ linear alkyl, with the proviso that, when R¹ and R² are both C₁-C₆ linear alkyl, they are different from each other and mixture thereof
such as tetraethoxysilane, tetramethoxysilane, methyltrimethoxysilane, glycidyloxypropyltrimethoxysilane.

Within the meaning of the present invention, curing agent means a compound that triggers the cross-linking of the epoxy resin. In particular, the curing agent is at least one compound of formula (IV): R'(NH)ₓ(NH₂)₂
wherein R'is C₁-C₆ linear or branched alkyl, or cycloalkyl and x is between 0 and 2.

Depending on the type of substituent R' bound to the nitrogen, the amines used can be divided into aliphatic or cycloaliphatic amines. Examples of curing agents are ethylenediamine, diethylenetriamine, triethylenetetramine (TETA), isophorondiamine, diamino-dicyclohexylmethane (PACM).

Within the meaning of the present invention, casting means a process for pouring a liquid mixture in a mold.

Within the meaning of the present invention, cross-linking means the chemical process of polymerization of a thermosetting resin, such as epoxy resin, by which it passes from the state of oligomer to the state of glassy solid.

Object of the present invention is an organic-inorganic hybrid consisting of an organic phase consisting of diglycidyl ether of bisphenol A (DGEBA) of formula (I) 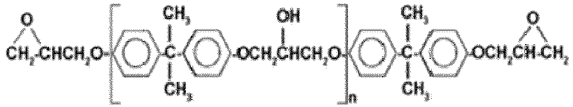 wherein n is greater than 0.1,
polymerized at room temperature
and an inorganic phase consisting of at least one silica nanodomain obtained *in situ,*
wherein said phases are together covalently bonded.

A further object of the present invention is a formulation in liquid phase comprising:
diglycidyl ether of bisphenol A (DGEBA) with formula (I) 40-70%
coupling agent 8-15%
siloxane precursor 10-16%
ionic liquid 0,5-10 %
curing agent 10-15%
wherein the percentages (%) are expressed as percentage by weight to the total weight of the formulation
characterized in that
the coupling agent is at least one amino-silane coupling agent.
the siloxane precursor is
at least one silicon alkoxide selected from the group comprising silicon alkoxides of formula (II): Si(OR)₄ wherein R is C₁-C₆ linear alkyl
and silicon alkoxides of formula (III): R¹-Si(OR²)₃
wherein R¹ is a C₁-C₆ linear alkyl eventually containing an epoxide ring
and R² is a C₁-C₆ linear alkyl with the proviso that, when R¹ and R² are both C₁-C₆ linear alkyl, they are different from each other and mixture thereof;
the ionic liquid is selected from the group consisting of ionic liquids based on phosphorus, inorganic deep eutectic solvents and mixture thereof;
the curing agent is at least one compound of formula (IV): R'(NH)ₓ(NH₂)₂
wherein R' is C₁-C₆ linear or branched alkyl, or cycloalkyl and x is between 0 and 2.

A further object of the present invention is an organic-inorganic hybrid consisting of an organic phase consisting of diglycidyl ether of bisphenol A (DGEBA) of formula (I) polymerized at room temperature and an inorganic phase consisting of at least one silica nanodomain, obtained *in situ,* wherein these phases are covalently bonded one to each other, obtainable by the method comprising the steps of:
a) functionalization of diglycidyl ether of bisphenol A (DGEBA) of formula (I) in the presence of a coupling agent;
b) hydrolysis of the siloxane precursor in the presence of ionic liquid;
c) mixing the product of step a) with product of step b);
d) mixing the product of step c) with a curing agent at room temperature;
e) casting of product of step d) at room temperature;
f) curing at room temperature product of step e) at room temperature;
wherein in step a) the coupling agent is at least one amino-silane coupling agent;
in step b) the siloxane precursor is at least one silicon alkoxide selected from the group comprising silicon alkoxides of formula (II): Si(OR)₄
wherein R is C₁-C₆ linear alkyl
and silicon alkoxides of formula (III): R¹-Si(OR²)₃
wherein R¹ is a C₁-C₆ linear alkyl optionally containing an epoxide ring
and R² is a C₁-C₆ linear alkyl with the proviso that, when R¹ and R² are both C₁-C₆ linear alkyl, they are different from each other and mixture thereof
and the ionic liquid is selected from the group consisting of ionic liquids based on phosphorus, inorganic deep eutectic solvents and mixture thereof;
in step d)
the curing agent is at least one compound of formula (IV): R'(NH)ₓ(NH₂)₂
wherein R' is C₁-C₆ linear or branched alkyl, or cycloalkyl and x is between 0 and 2.

It is an object of the present invention a method for the structural restoration of buildings.

Object of the present invention is the use of the aforementioned organic-inorganic hybrid as an adhesive or as a matrix for composite materials.

A further object of the present invention is an adhesive obtained by casting and curing of the formulation in the liquid phase comprising, in percentage by weight to the total weight of the formulation:
diglycidyl ether of bisphenol A (DGEBA) of formula (I) 40-70%
coupling agent 8-15%
siloxane precursor 10-16%
ionic liquid 0,5-10 %
curing agent 10-15%
characterized in that
the coupling agent is at least one amino-silane coupling agent;
the siloxane precursor is at least one silicon alkoxide selected from the group comprising silicon alkoxides of formula (II): Si(OR)₄
wherein R is C₁-C₆ linear alkyl
and silicon alkoxides of formula (III): R¹-Si(OR²)₃
wherein R¹ is a C₁-C₆ linear alkyl optionally containing an epoxide ring
and R² is a C₁-C₆ linear alkyl with the proviso that, when R¹ and R² are both C₁-C₆ linear alkyl, they are different from each other and mixture thereof;
the ionic liquid is selected from the group consisting of ionic liquids based on phosphorus, inorganic deep eutectic solvents and mixture thereof;
the curing agent is at least one compound of formula (IV): R'(NH)ₓ(NH₂)₂
wherein R' is C₁-C₆ linear or branched alkyl, or cycloalkyl and x is between 0 and 2.

Object of the present invention is a method for the structural restoration of buildings.

A further object of the present invention is a matrix for composite materials obtained by casting and curing of the formulation in the liquid phase comprising, in percentage by weight to the total weight of the formulation:
diglycidyl ether of bisphenol A (DGEBA) of formula (I) 40-70%
coupling agent 8-15%
siloxane precursor 10-16%
ionic liquid 0,5-10 %
curing agent 10-15%
characterized in that
the coupling agent is at least one amino-silane coupling agent; the siloxane precursor is at least one silicon alkoxide selected from the group comprising silicon alkoxides of formula (II): Si(OR)₄
wherein R is C₁-C₆ linear alkyl
and silicon alkoxides of formula (III): R¹-Si(OR²)₃
wherein R¹ is a C₁-C₆ linear alkyl optionally containing an epoxide ring
and R² is a C₁-C₆ linear alkyl with the proviso that, when R¹ and R² are both C₁-C₆ linear alkyl, they are different from each other and mixture thereof;
the ionic liquid is selected from the group consisting of ionic liquids based on phosphorus, inorganic deep eutectic solvents and mixture thereof;
the curing agent is at least one compound of formula (IV): R'(NH)ₓ(NH₂)₂
wherein R' is C₁-C₆ linear or branched alkyl, or cycloalkyl and x is between 0 and 2.

It is an object of the present invention is the process for the preparation of the formulation in the liquid phase comprising the following steps
a) functionalization of diglycidyl ether of bisphenol A (DGEBA) of formula (I) in the presence of a coupling agent;
b) hydrolysis of the siloxane precursor in the presence of ionic liquid;
c) mixing the product of step a) with product of step b);
d) mixing the product of step c) with a curing agent at room temperature;
e) casting of product of step d) at room temperature;
wherein in step a) the coupling agent is at least one amino-silane coupling agent;
in step b) the siloxane precursor is at least one silicon alkoxide selected from the group comprising silicon alkoxides of formula (II): Si(OR)₄
wherein R is C₁-C₆ linear alkyl
and silicon alkoxides of formula (III): R¹-Si(OR²)₃
wherein R¹ is a C₁-C₆ linear alkyl eventually containing an epoxide ring
and R² is a C₁-C₆ linear alkyl with the proviso that when R¹ and R² are both C₁-C₆ linear alkyl, they are different from each other and mixture thereof
and the ionic liquid is selected from the group consisting of ionic liquids based on phosphorus, inorganic deep eutectic solvents and mixture thereof;
in step d) the curing agent is at least one compound of formula (IV): R'(NH)ₓ(NH₂)₂
wherein R' is C₁-C₆ linear or branched alkyl, or cycloalkyl and x is between 0 and 2.

It is an object of the present invention the process for the preparation of the hybrid organic-inorganic comprising the following steps:
a) functionalization of diglycidyl ether of bisphenol A (DGEBA) of formula (I) in the presence of a coupling agent;
b) hydrolysis of the siloxane precursor in the presence of ionic liquid;
c) mixing the product of step a) with the product of step b);
d) mixing the product of step c) with an amine curing agent at room temperature;
e) casting product of step d) at room temperature;
f) curing at room temperature product of step e) at room temperature;
wherein in step a) the coupling agent is at least one amino-silane coupling agent;
in step b) the siloxane precursor is at least one silicon alkoxide selected from the group comprising silicon alkoxides of formula (II): Si(OR)₄
wherein R is C₁-C₆ linear alkyl
and silicon alkoxides of formula (III): R¹-Si(OR²)₃
wherein R¹ is a C₁-C₆ linear alkyl optionally containing an epoxide ring
and R² is a C₁-C₆ linear alkyl with the proviso that when R¹ and R² are both C₁-C₆ linear alkyl, they are different from each other and mixture thereof
and the ionic liquid is selected from the group consisting of ionic liquids based on phosphorus, inorganic deep eutectic solvents and mixture thereof;
in step d) the curing agent is at least one compound of formula (IV): R'(NH)ₓ(NH₂)₂
wherein R' is C₁-C₆ linear or branched alkyl, or cycloalkyl and x is between 0 and 2.

It is object of the present invention a method for the structural restoration of buildings proving the application, by injection or brushing in the recovery site, of the formulation in a liquid phase comprising, in weight percentage to the total weight of the formulation:
diglycidyl ether of bisphenol A (DGEBA) of formula (I) 40-70%
coupling agent 8-15%
siloxane precursor 10-16%
ionic liquid 0,5-10 %
curing agent 10-15%
characterised in that
these formulation being obtained by
a) functionalization of diglycidyl ether of bisphenol A (DGEBA) of formula (I) in the presence of a coupling agent;
b) hydrolysis of the siloxane precursor in the presence of ionic liquid;
c) mixing the product of step a) with the product of step b);
d) mixing the product of step c) with a curing agent at room temperature;
e) casting product of step d) at room temperature;
wherein the coupling agent is at least one amino-silane coupling agent;
the siloxane precursor is at least one silicon alkoxide selected from the group comprising silicon alkoxides of formula (II): Si(OR)₄
wherein R is C₁-C₆ linear alkyl
and silicon alkoxides of formula (III): R¹-Si(OR²)₃
wherein R¹ is a C₁-C₆ linear alkyl optionally containing an epoxide ring
and R² is a C₁-C₆ linear alkyl with the proviso that when R¹ and R² are both C₁-C₆ linear alkyl they are different from each other and mixture thereof
and the ionic liquid is selected from the group consisting of ionic liquids based on phosphorus, inorganic deep eutectic solvents and mixture thereof;
in step d) the curing agent is at least one compound of formula (IV): R'(NH)ₓ(NH₂)₂
wherein R' is C₁-C₆ linear or branched alkyl, or cycloalkyl and x is between 0 and 2.
and the subsequent crosslinking of the same at room temperature for a time sufficient for the full cure of the same until obtaining a matrix formed by the organic-inorganic hybrid consisting of an organic phase consisting of diglycidyl ether of bisphenol A (DGEBA) of formula (I) polymerized at room temperature and an inorganic phase consisting of at least one silica nanodomain, obtained *in situ,* wherein these phases are covalently bonded one to each other.

Preferably, the formulation has the following composition, in percent by weight of the total weight:
diglycidyl ether of bisphenol A (DGEBA) of formula (I) 50-66%
coupling agent 10-12%
siloxane precursor 12-16%
ionic liquid 1,5-5 %
curing agent 8-13%

More preferably, the formulation has the following composition, in percent by weight of the total weight:
diglycidyl ether of bisphenol A (DGEBA) of formula (I) 56-63%
coupling agent 10-12 %
siloxane precursor 13-16 %
ionic liquid 1,5-5 %
curing agent 8-13%

Preferably in the diglycidyl ether of bisphenol A (DGEBA) with formula (I) 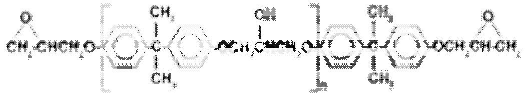 n is comprised between 0.1 and 5
more preferably n is 0,15

Preferably, diglycidyl ether of bisphenol A (DGEBA) of formula (I) has a molecular weight between 340 and 700 g/mol and even more preferably has a molecular weight of 388 g/mol.

Preferably, the silica nanodomain is a nanoparticle.

Preferably the amino-silane coupling agent is trimethoxysilyl-propylamine.

Preferably, the siloxane precursor is selected from the group consisting of: tetraethoxysilane, tetramethoxysilane, methyltrimethoxysilane, glycidyloxypropyltrimethoxysilane and mixture thereof.

More preferably, the siloxane precursor is a mixture of tetraethoxysilane (TEOS) and glycidyloxypropyltrimethoxysilane (GOTMS).

Preferably, the ionic liquid based on phosphorus is a ionic liquid based on phosphinate phosphonium, even more preferably is trihexyl-tetradecylphosphonium trimethylpentyl-phosphinate.

Preferably, the deep eutectic solvent is an eutectic mixture of choline chloride and urea in a molar ratio 1:2. For example, these eutectic mixture of choline chloride and urea is obtained by mixing choline chloride and urea in a molar ratio 1:2 at 90 °C.

Preferably, the curing agent is selected from the group consisting of: ethylenediamine, diethylenetriamine, triethylenetetramine (TETA), isophorondiamine, diaminodicyclohexylmethane (PACM).

More preferably, the curing agent is triethylenetetramine or 4,4'-diaminodicyclohexylmethane and mixture thereof.

In a preferred embodiment, the formulation has the following composition in percent by weight of the total weight:
diglycidyl ether of bisphenol A (DGEBA) 60,3 %
trimethoxysilylpropylamine 10,9 %
mixture tetraethoxysilane (TEOS)/glycidyloxypropyltrimethoxysilane (GOTMS) 14,6 %
mixture choline chloride/urea (1:2) 1,5 %
4,4'-diaminodicyclohexylmethane 12,7 %
wherein n is 0,15 and the molecular weight is 388 g/mol.

In a preferred embodiment, the formulation has the following composition in percent by weight of the total weight:
diglycidyl ether of bisphenol A (DGEBA) 63,4 %
trimethoxysilylpropylamine 11,4 %
mixture tetraethoxysilane (TEOS)/ glycidyloxypropyltrimethoxysilane (GOTMS) 15,4 %
mixture choline chloride/urea (1:2) 1,6 %
triethylenetetramine 8,2 %
wherein n is 0,15 and the molecular weight is 388 g/mol.

In a preferred embodiment, the formulation has the following composition in percent by weight of the total weight:
diglycidyl ether of bisphenol A (DGEBA) 62,4 %
trimethoxysilylpropylamine 11,2 %
mixture tetraethoxysilane (TEOS)/ glycidyloxypropyltrimethoxysilane (GOTMS) 15,2 %
mixture choline chloride/urea (1:2) 3,1 %
triethylenetetramine 8,1 %
wherein n is 0,15 and the molecular weight is 388 g/mol.

In a preferred embodiment, the formulation has the following composition in percent by weight of the total weight:
diglycidyl ether of bisphenol A (DGEBA) 59,4 %
trimethoxysilylpropylamine 10,7 %
mixture tetraethoxysilane (TEOS)/glycidyloxypropyltrimethoxysilane (GOTMS) 14,4 %
trihexyl-tetradecyl phosphonium trimethylpentyl-phosphinate 3,0 %
4,4'-diaminodicyclohexylmethane 12,5 %
wherein n is 0,15 and the molecular weight is 388 g/mol.

In a preferred embodiment, the formulation has the following composition in percent by weight of the total weight:
diglycidyl ether of bisphenol A (DGEBA) 62,4 %
trimethoxysilylpropylamine 11,2 %
mixture tetraethoxysilane (TEOS)/ glycidyloxypropyltrimethoxysilane (GOTMS) 15,2 %
trihexyl-tetradecylphosphonium trimethylpentyl-phosphinate 3,1 %
triethylenetetramine 8,1 %
wherein n is 0,15 and the molecular weight is 388 g/mol.

In a preferred embodiment, the formulation has the following composition in percent by weight of the total weight:
diglycidyl ether of bisphenol A (DGEBA) 57,7 %
trimethoxysilylpropylamine 10,4 %
mixture tetraethoxysilane (TEOS)/glycidyloxypropyltrimethoxysilane (GOTMS) 14,0 %
trihexyl-tetradecyl phosphonium trimethylpentyl-phosphinate 5,8 %
4,4'-diaminodicyclohexylmethane 12,1 %
wherein n is 0,15 and the molecular weight is 388 g/mol.

In a preferred embodiment, the formulation has the following composition in percent by weight of the total weight:
diglycidyl ether of bisphenol A (DGEBA) 60,5 %
trimethoxysilylpropylamine 10,9 %
mixture tetraethoxysilane (TEOS)/glycidyloxypropyltrimethoxysilane (GOTMS) 14,7 %
trihexyl-tetradecyl phosphonium trimethylpentyl-phosphinate 6,0 %
triethylenetetramine 7,9 %
wherein n is 0,15 and the molecular weight is 388 g/mol.

In a preferred embodiment, the formulation has the following composition in percent by weight of the total weight:
diglycidyl ether of bisphenol A (DGEBA)) 59,4 %
trimethoxysilylpropylamine 10,7 %
mixture tetraethoxysilane (TEOS)/glycidyloxypropyltrimethoxysilane (GOTMS) 14,4 %
mixture choline chloride/urea (1:2) 3,0 %
4,4'-diaminodicyclohexylmethane 12,5 %
wherein n is 0,15 and the molecular weight is 388 g/mol.

Regarding the processes, preferably in step a) the temperature is comprised between 50 and 120 °C, even more preferably is between 60 and 110 °C, even more preferably is 90 °C.

Preferably step a) is carried out for a time of between 30 and 150 minutes and even more preferably of 120 minutes.

Preferably in step b) the temperature is comprised between 50 and 120 °C, even more preferably is between 60 and 110 °C, even more preferably is 90 °C.

Preferably step b) is carried out for a time comprised between 30 and 150 minutes and even more preferably of 120 minutes.

Preferably in step c) the temperature is comprised between 50 and 120 °C, even more preferably is between 60 and 110 °C, even more preferably is 90 °C.

Preferably step c) is carried out for a time comprised between 30 and 150 minutes and even more preferably of 120 minutes.

Preferably step d) is carried out for a time comprised between 10 and 30 minutes and even more preferably of 15 minutes.

Preferably in steps c) and d) mixing is carried out with a magnetic stirrer.

### Examples

### Example 1 - Preparation

Eight (8) formulations in the liquid phase were prepared using diglycidyl ether of bisphenol A (DGEBA) with a molecular weight of 388 g/mol, amino-silane coupling agent trimethoxysilylpropylamine, mixture of two alkoxysilane precursors of the silica necessary to perform the reactions of hydrolysis and condensation in the sol-gel process, consisting of tetraethoxysilane (TEOS) and glycidyloxypropyltrimethoxysilane (GOTMS), an ionic liquid based on phosphonium, such as trihexyl-tetradecyl phosphonium trimethylpentyl-phosphinate, or ionic liquid with deep eutectic constituted by the eutectic mixture of choline chloride and urea in a molar ratio 1:2 (where the liquid eutectic mixture at room temperature was obtained by mixing thoroughly in a beaker choline chloride and urea in a molar ratio of 1:2 to 90 °C), curing agent triethylenetetramine or 4,4'-diaminodicyclohexylmethane. The compositions of the eight formulations are reported in Table 1.

**Table 1**

| | **Content (% by weight)** | | | | | | | |
|---|---|---|---|---|---|---|---|---|
| **Formulation (#)** | **1** | **2** | **3** | **4** | **5** | **6** | **7** | **8** |
| **DGEBA** | 60.3 | 63.4 | 59.4 | 62.4 | 59.4 | 62.4 | 57.7 | 60.5 |
| **trimethoxysilylpropylamine** | 10.9 | 11.4 | 10.7 | 11.2 | 10.7 | 11.2 | 10.4 | 10.9 |
| **TEOS/GOTMS** | 14.6 | 15.4 | 14.4 | 15.2 | 14.4 | 15.2 | 14.0 | 14.7 |
| **Trihexyltetradecylphosphonium trimethylpentylphosphinate** | 0.0 | 0.0 | 0.0 | 0.0 | 3.0 | 3.1 | 5.8 | 6.0 |
| **choline chloride/urea (1:2)** | 1.5 | 1.6 | 3.0 | 3.1 | 0.0 | 0.0 | 0.0 | 0.0 |
| **triethylenetetramine** | 0.0 | 8.2 | 0.0 | 8.1 | 0.0 | 8.1 | 0.0 | 7.9 |
| **4,4'-diaminodicyclohexylmethane** | 12.7 | 0.0 | 12.5 | 0.0 | 12.5 | 0.0 | 12.1 | 0.0 |

DGEBA was functionalized with an amino-silane coupling agent for 2 hours at a temperature of 90 °C; separately, the siloxane precursors were hydrolyzed in the presence of the ionic liquid for 2 hours at a temperature of 90 °C. The two mixtures thus obtained were mixed together for 2 hours at a temperature of 90 °C and further blended at room temperature with the curing agent. At the end, the so obtained formulation was casted into molds or injected into the slot or brushed and cross-linked at room temperature.

Two formulations were prepared as a control, based on mixtures of diglycidyl ether of bisphenol A (DGEBA) of molecular weight 388 g/mol and curing agent triethylenetetramine or 4,4'-diaminodicyclohexylmethane, respectively.

### Example 2 - Characterization of the liquid hybrid formulations

The liquid hybrid formulations were characterized before polymerization. The calorimetric characterization was performed by means of Differential Scanning Calorimetry (DSC 822e, Mettler Toledo) carried out by heating from -15 °C to 300 °C, 10 °C/min samples of hybrid systems of mass comprised between 10 and 15 mg. The tests were conducted in an inert atmosphere thanks to a continuous and uniform flow of nitrogen with a flow rate of 60 ml/min.

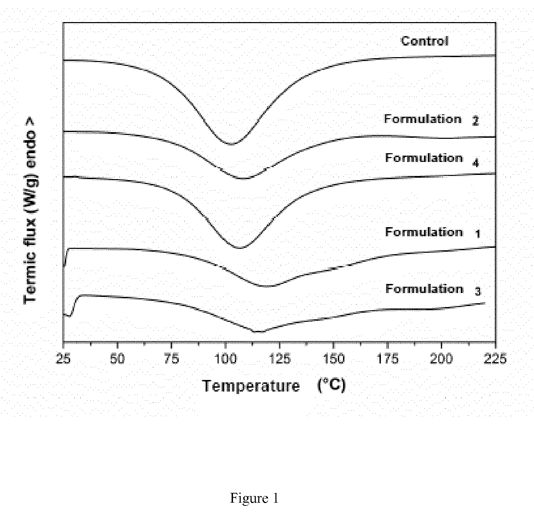

The results of the calorimetric tests performed on the liquid hybrid formulations 1-4 are shown in figure 1 in terms of heat flow associated with the polymerization reaction of the organic fraction as a function of the temperature.

From Figure 1 it can be noted that systems with aliphatic hardener begin to crosslink at lower temperature, as observed by the reduction of about 10 °C of the onset temperature of the exothermic peak compared to the corresponding systems with cycloaliphatic hardener. In this case, in fact, even if the peak of polymerization is shifted 10 °C towards higher temperatures, its closure takes place in a temperature range greater and the produced heat of polymerization is not very different from that of the formulations with aliphatic hardener. All systems 1-8 polymerize and simultaneously develop a structure of nanometer silica dispersed in a continuous way in the organic matrix. The results of the formulations 5-8 are similar to those of the formulations 1-4.

The rheological characterization was carried out at a constant temperature of 40 °C using a parallel plate rheometer ARES (Rheometric Scientific).

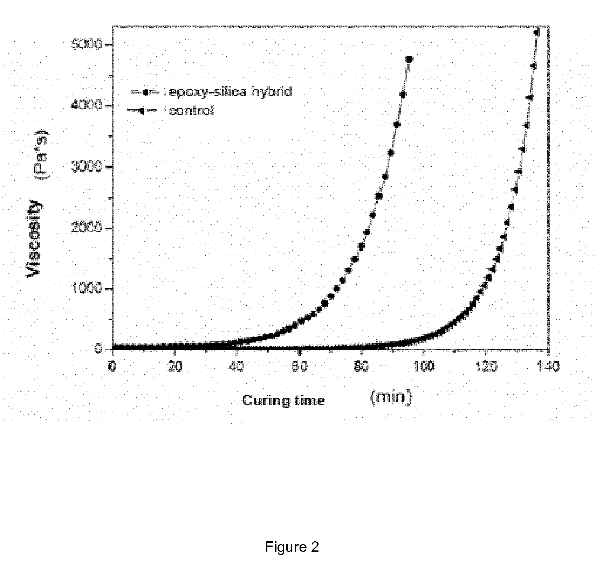

Figure 2 shows the variations of viscosity at 40 °C, monitored for a time up to 140 minutes, of the hybrid formulation epoxy-silica No. 3, compared with an epoxy control formulation, constituted by the epoxy oligomer and cycloaliphatic hardener. The other formulations have reported similar results. In Figure 2 it can be seen that the viscosity curve shows a sudden increase in correspondence of the gelation of the resin, i.e. the transformation of the resin from a liquid to a gel. The experimental data show that the addition of ionic liquid accelerates the gelation with respect to the control system, since the sudden increase in viscosity during the gelation takes place in less time compared to what happens for the control resin.

### Eample 3 - Characterization of the solid hybrid formulations

The solid hybrid formulations were characterized after polymerization from the viewpoint of the thermal, mechanical and morphological properties.

The differential scanning calorimetric analysis (DSC) was carried out by heating in continuous and uniform flow of nitrogen from 0 °C to 300 °C, 10 °C/min, samples of hybrid systems of mass comprised between 10 and 15 mg. Table 2 shows the values of the glass transition temperature (Tg) monitored up to 90 days of the solid hybrid formulation 3, compared with the control system constituted by the oligomer epoxy and cycloaliphatic. Other formulations have reported similar results.

**Table 2**

| | **Glass transition temperature Tg (°C)** | | |
|---|---|---|---|
| **Curing time** | **Control** | **Epoxy-silica hybrid** | **Increase compared to the control (%)** |
| 24 hours | 28.0 ± 0.4 | 41.8 ± 0.4 | +49 |
| 48 hours | 39.6 ± 0.7 | 45.6 ± 0.5 | +15 |
| 7 days | 46.6 ± 0.6 | 53.9 ± 0.4 | +16 |
| 30 days | 51.9 ± 0.4 | 59.6 ± 0.6 | +15 |
| 60 days | 54.5 ± 0.5 | 62.8 ± 0.7 | +15 |
| 90 days | 56.3 ± 0.7 | 64.5 ± 0.6 | +15 |

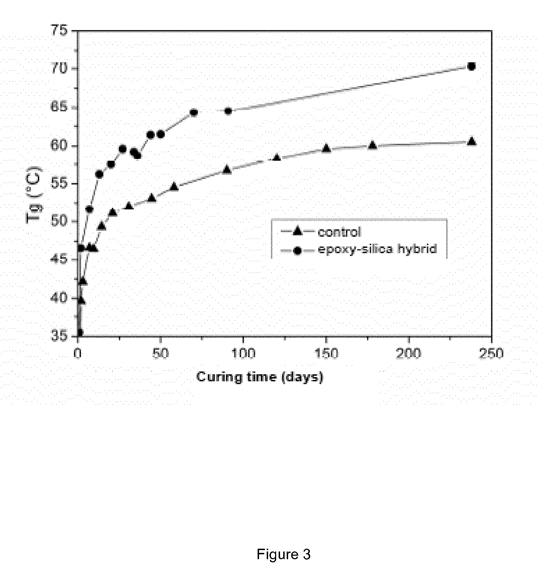

Figure 3 represents the temporal evolution, monitored for a period of about 8 months, the glass transition temperature (Tg) obtained by differential scanning calorimetry (DSC), of the hybrid epoxy-silica formulation compared with the control epoxy formulation.

It was found that, after only 24 hours of cure at ambient temperature, the Tg of optimized hybrid system was 49% higher than that of the control system. For longer times, for example one month after the preparation, the Tg of the hybrid system optimized still remained 15% higher to the value of the control system and this superiority is maintained unchanged at least up to 8 months after the preparation.

The results in Figure 3 and Table 2 demonstrate the major glass transition temperatures developed by the hybrid systems with respect to control. This indicates an improved resistance to plasticization caused environmental humidity and therefore an improved resistance to environmental agents. Furthermore, the main Tg of the hybrid suggest that a increased degree of cure than the control, with a consequent reduction of all the limits presented by the cold-cured systems due to a not complete cross-linking.

The thermogravimetric characterization was conducted by subjecting the solid samples, treated at ambient temperature, with a mass of 10 mg at a heating in air from 30 ° C to 700 ° C at 10 ° C / min. The instrument used was TGA / DSC1 of Mettler Toledo.

As shown from the data reported in the following Table 3, in which the decomposition temperatures to 5% by weight (T_{0.05}) and 50% by weight (T_{0.5}) and the residue at 700 ° C are reported, the hybrids 1-4 showed an improved thermal stability.

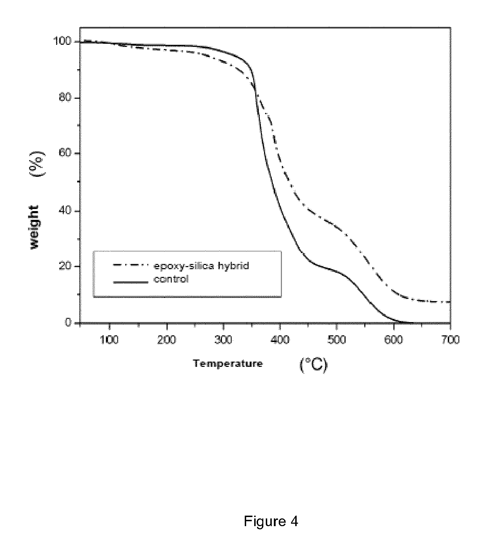

As can be seen from Figure 4, the control system, consisting of only epoxy resin, showed no weight loss at temperatures below 300 ° C and the degradation occurred mostly between 350 and 500 ° C. Instead, the hybrid epoxy-silica system, after an initial weight loss due to evaporation of by-products of the hydrolysis reaction and condensation, showed better stability at elevated temperatures, as evidenced by the increase in T_{0.5} of 30-50 °C according to the used formulations. The increased thermal resistance was due to the presence of a strong interaction between the organic and inorganic domains. The other formulations have reported similar results.

**Table 3**

| **System** | **T_{0.05}** | **T_{0.5}** | **R₇₀₀** |
|---|---|---|---|
| | **(°C)** | **(°C)** | **(%)** |
| Control | 339.1 ± 5.1 | 385.0 ± 5.0 | 0.3 ± 0.01 |
| Hybrids 1-4 | 272.7-320.5 ÷ 4.8 | 416.5 ÷ 430.2 ± 4.8 | 5÷15 ± 0.01 |

The mechanical characterization was carried out using three-point bending tests carried out with a dynamometer LLOYD LR5K on solid specimens, cured at ambient temperature, in the shape of parallelepiped, of a thickness between 2 and 4 mm and span length 16 times greater than the thickness. The tests were carried out with strain rate of 1.7 mm / min.

Figure 4 shows the comparison of the flexural mechanical properties, in terms of strength at break and elastic modulus, of the hybrid formulation N. 7 compared with an epoxy control formulation. It was evident the considerable increase in the resistance to rupture, that doubled compared to that of the pure epoxy resin. Also the rigidity of the system increased due to the presence of nanostructured silica in the organic matrix, as evidenced by a 22% increase of the flexural elastic modulus. The other formulations have reported similar results.

### Example 4 - Morphological characterization

The solid hybrid formulations (1-8) were morphologically characterized by scanning electron microscopy (SEM) by means of the ZEISS EVO 40 instrument equipped with Bruker EDS elemental analyzer. The comparison of the micrograph obtained with a scanning electron microscope (SEM) of the hybrid formulations compared to controls showed that the former had a very homogeneous morphology with domains of silica diffused in the organic matrix, while those of the controls were characterized by the presence of fragile fracture lines. The presence of silica homogeneously diffused in the whole surface was also confirmed by EDS microanalysis.

### Example 5 Characterization of the hybrid formulations applied on the natural stone

The liquid hybrid formulations (1-8) were applied by brush on surfaces of calcarenitic stone, such as Lecce stone and gentile stone, and let crosslinked at room temperature. Materials were investigated with the following measurement techniques: measurements of contact angle using the instrument First Ten Angstroms FTA1000 Quick Start (according to NORMAL 33/89), measurements of color change of the stone produced by the hybrid through a CR-410 Konica Minolta reflectance colorimeter according to the NORMAL recommendation 43/93. The data were acquired in space and CIE color variations of the surfaces as a result of the treatments were expressed in terms of ΔE.

The measurements of contact angle showed that the systems cured with the cycloaliphatic curing agent possessed a higher water repellency than the systems with aliphatic curing agent, which instead have a more hydrophilic behavior. The formulations present different behaviors towards water also according to the type and concentration of ionic liquid added. The hybrid formulations present lower chromatic change compared to non-hybrid formulations confirming the achieving of a product as transparent as possible, that did not damage the aesthetic appearance of the treated stone material.

To assess the depth of penetration within the stone material of the several realized formulations, observations with the scanning electron microscope SEM were performed on fragments of stone treated with the studied adhesives. These observations were accompanied by elemental analysis, made possible thanks to the use of an energy dispersive detector (EDS), which allowed to identify and quantify the chemical elements present in a specific area (mapping) or along a certain line. In all the studied systems the elemental map of the stone presented high values of calcium, a chemical element predominant in the calcarenitic stone investigated. These values tended to decrease at the stone-adhesive interface, before reducing almost to zero in the surface layer of the adhesive. Oxygen, although present in lower concentrations, followed the same trend of calcium, being more present in the stone instead of the interface and in the adhesive. Carbon presented a quite evident zone distribution, since it is a constituent element of the resin used for the preparation of the hybrids, which confirmed the penetration of the adhesive inside the stone. It appeared to be very present in the adhesive, less in the interface, and even less in the stone. Silicon followed the same trend, as it is the inorganic component of the hybrids. Chlorine and phosphorus, present in the ionic liquid added to the formulations, appeared to be more present in the adhesive and in the interface. The elemental analysis taken along a line enabled to confirm the good penetration of the adhesive inside the stone, thanks to the gradual decrease of the calcium and oxygen from the stone toward the adhesive, accompanied by the increase of the signal values of both carbon and silicon.

## Claims

1. Organic-inorganic hybrid consisting of an organic phase consisting of diglycidyl ether of bisphenol A (DGEBA) of formula (I): 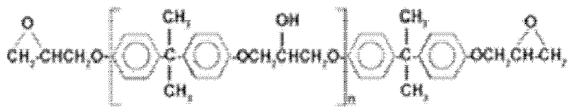 Wherein n is greater than 0,1
polymerized at room temperature and an inorganic phase consisting of at least one silica nanodomain obtained *in situ,* wherein said phases are covalently bonded one to each other.

2. Hybrid according to claim 1 wherein n is comprised between 0,1 and 5.

3. Hybrid according to claim 1 wherein the diglycidyl ether of bisphenol A (DGEBA) of formula (I) has a molecular weight comprised between 340 and 700 g/mol.

4. Hybrid according to claim 1 wherein the silica nanodomain is a nanoparticle.

5. Formulation in liquid phase consisting of:
diglycidyl ether of bisphenol A (DGEBA) 40-70%
coupling agent 8-15%
siloxane precursor 10-16%
ionic liquid 0,5-10 %
curing agent 10-15%
wherein the percentages (%) are expressed as percentage by weight of the total weight of the formulation
**characterized in that** the coupling agent is at least one amino-silane coupling agent,
the siloxane precursor is at least one silicon alkoxide selected from the group comprising silicon alkoxides of formula (II): Si(OR)₄
wherein R is C₁-C₆ linear alkyl
and silicon alkoxides of formula (III): R'-Si(OR²)₃
wherein R¹ is a C₁-C₆ linear alkyl optionally containing an epoxide ring
and R² is a C₁-C₆ linear alkyl with the proviso that when R¹ and R² are both C₁-C₆ linear alkyl they are different from each other and mixture thereof
the ionic liquid is selected from the group consisting of ionic liquids based on phosphorus, inorganic deep eutectic solvents and mixture thereof
the curing agent is at least one compound of formula (IV): R'(NH)ₓ(NH₂)₂
wherein R' is C₁-C₆ linear or branched alkyl, or cycloalkyl and x is between 0 and 2.

6. Formulation according to claim 5 wherein the amino-silane coupling agent is trimethoxysilylpropylamine.

7. Formulation according to claim 5 wherein the siloxane precursor is selected from the group consisting of: tetraethoxysilane, tetramethoxysilane, methyltrimethoxysilane, glycidyloxypropyltrimethoxysilane and mixture thereof.

8. Formulation according to claim 5 wherein the ionic liquid based on phosphorus is a ionic liquid based on phosphinate phosphonium.

9. Formulation according to claim 5 wherein the ionic liquid is an eutectic mixture of choline chloride and urea in a molar ratio 1:2.

10. Formulation according to claim 5 wherein the curing agent is selected from the group consisting of: ethylenediamine, diethylenetriamine, triethylenetetramine, isophorondiamine, diaminodicyclohexylmethane and mixtures thereof.

11. Process for the preparation of the organic-inorganic hybrid of claim 1 comprising the following steps:
a) functionalization of diglycidyl ether of bisphenol A (DGEBA) in the presence of a coupling agent at a temperature comprised between 50 and 120°C;
b) hydrolysis of the siloxane precursor in the presence of ionic liquid at a temperature comprised between 50 and 120°C;
c) mixing the product of step a) with product of step b) at a temperature comprised between 50 and 120°C;
d) mixing the product of step c) with an amino curing agent at room temperature ;
e) casting of the product of step d) at room temperature;
f) crosslinking at room temperature of the product of step e) at room temperature;

12. Process for the preparation of the formulation of claim 5 comprising the following steps:
a) functionalization of diglycidyl ether of bisphenol A (DGEBA) of formula (I) in the presence of a coupling agent at a temperature comprised between 50 and 120°C;
b) hydrolysis of the siloxane precursor in the presence of ionic liquid at a temperature comprised between 50 and 120°C;
c) mixing the product of step a) with product of step b) at a temperature comprised between 50 and 120°C;;
d) mixing the product of step c) with an amino curing agent at room temperature;
e) casting of the product of step d) at room temperature.

13. Use of the organic-inorganic hybrid of claim 1 as an adhesive.

14. Use of the organic-inorganic hybrid of claim 1 as a matrix for composite materials.

15. Method for the structural restoration of buildings proving the application, by injection or brushing in the recovery site, of the formulation in liquid phase of claim 5 and subsequent crosslinking of the same at room temperature for a time sufficient for the full cure of the same until obtaining a matrix formed by the hybrid organic-inorganic of claim 1.
